Europäisches Patentamt

(19) European Patent Office

Office européen des brevets

(11) Numéro de publication: **0 078 049**
**B1**

(12) **FASCICULE DE BREVET EUROPEEN**

(45) Date de publication du fascicule du brevet: **28.01.87**

(21) Numéro de dépôt: **82109871.2**

(22) Date de dépôt: **26.10.82**

(51) Int. Cl.⁴: **G 02 B 6/38**

(54) **Dispositif de renforcement de la soudure en bout de deux fibres optiques.**

(30) Priorité: **28.10.81 FR 8120212**

(43) Date de publication de la demande:
**04.05.83 Bulletin 83/18**

(45) Mention de la délivrance du brevet:
**28.01.87 Bulletin 87/05**

(84) Etats contractants désignés:
**CH DE FR GB IT LI NL SE**

(56) Documents cités:
**AU-B- 489 529**
**US-A-3 904 269**
**US-A-3 944 328**
**US-A-4 196 965**

**LASER FOCUS, vol. 14, no. 5, mai 1978,**
**Newton (US), M.L. DAKSS: "Splicing optical**
**fibers", pages 66-70**

(73) Titulaire: **LES CABLES DE LYON Société**
**anonyme dite:**
**170 quai de Clichy**
**F-92111 Clichy Cedex (FR)**

(72) Inventeur: **Degoix, Bernard**
**17, rue Lalande**
**F-62100 Calais (FR)**
Inventeur: **Boussemaer, Daniel**
**90bis, rue des Quatre Coins**
**F-62100 Calais (FR)**
Inventeur: **Allemand, Didier**
**329, Allée des Mouettes**
**F-62730 Marck (FR)**

(74) Mandataire: **Weinmiller, Jürgen et al**
**Lennéstrasse 9**
**D-8133 Feldafing (DE)**

Courier Press, Leamington Spa, England.

## Description

La présente invention concerne un dispositif de renforcement de la soudure en bout de deux fibres optiques dont les extrémités ont été dénudées de leur gaine de protection mécanique, comprenant un tube capillaire en métal pour le renforcement de ladite soudure, entourant avec un faible jeu les gaines des fibres optiques de part et d'autre de ces extrémités sur une certaine longueur de ces gaines.

On sait que les caractéristiques mécaniques des fibres optiques de part et d'autre d'une soudure, notamment leur allongement à la rupture, sont environ 20 fois inférieures à celles de la fibre originale. De ce fait, lorsqu'une fibre d'une liaison optique est soumise à une contrainte de traction, les zones des soudures en constituent les éléments les plus faibles, et sa rupture, lorsqu'elle a lieu, se produit à leur niveau.

On a déjà proposé dans le document "A34-Mbit/s optical field trial system," E. Adler, H. Haupt, W. Zschunke, 4th European Conference on optical communication, Genova,. 12—15 Sept. 1978, de renforcer une zone de soudure d'une fibre optique à l'aide d'un tube en métal malléable de faible module d'élasticité, serti sur les gaines des fibres de part et d'autre des extrémités dénudées. On augmente dans une certaine mesure les propriétés mécaniques de la zone de soudure, mais celles-ci restent encore très inférieures à celles de la fibre originale.

On a en outre déjà proposé dans le document FR—A 2380559 ou US—A 4196965, un dispositif de renforcement de la soudure en bout de deux fibres optiques dont la gaine optique, d'indice inférieure à celui du coeur des fibres, a été enlevée dans la zone de part et d'autre de la soudure. Dans cette zone, les fibres optiques sont entourées par un manchon à deux couches, une couche interne en résine fluorée ou résine silicone, d'indice de réfraction inférieur à celui du coeur des fibres, et une couche externe en métal. L'espace compris entre le manchon et le coeur des fibres peut être rempli d'une résine d'indice de réfraction inférieur à celui du coeur des fibres, le manchon pouvant alors ne comprendre qu'une seule couche en métal. Cependant, les gaines optiques en matière thermoplastique, facile à séparer du coeur des fibres, provenant des fibres de qualité inférieure du point de vue de la transmission de la lumière, et celles en silice ou en verre, donnant des fibres optiques de bonne qualité, sont difficiles à séparer du coeur des fibres. Par ailleurs, le remplacement de la gaine optique par un manchon, même à couche interne en résine d'indice de réfraction inférieur à celui de coeur des fibres, risque de créer une discontinuité dans la transmission de rayonnement lumineux à la limite entre la gaine optique et le manchon.

La présente invention a pour but de procurer un dispositif de renforcement qui assure à la zone de la soudure des propriétés mécaniques, notamment une résistance et un allongement à la traction, voisines de celles de la fibre optique originale, de sorte que cette zone de soudure ne soit pas systématiquement le lieu d'une rupture éventuelle. Elle a encore pour but de procurer un dispositif de renforcement dont la préparation soit facile et qui ne crée par de discontinuité dans la transmission du rayonnement lumineux.

Le dispositif de renforcement selon l'invention est caractérisé en ce que tout l'espace subsistant entre le tube capillaire et, d'une part les extrémités dénudées des fibres, d'autre par les gaines de celles-ci, est rempli d'un adhésif liquide qui durcit en l'absence d'air, la sortie de chaque extrémité du tube capillaire étant obturée par une goutte d'un adhésif à prise substantiellement plus rapide que ledit adhésif liquide.

Il répond en outre de préférence à au moins l'une des caractéristiques suivantes:
— L'adhesif à prise lente est un poly-diester acrylique.
— Le métal du tube capillaire est une acier inoxydable.
— L'épaisseur du tube est d'environ le quart de son diamètre extérieur.

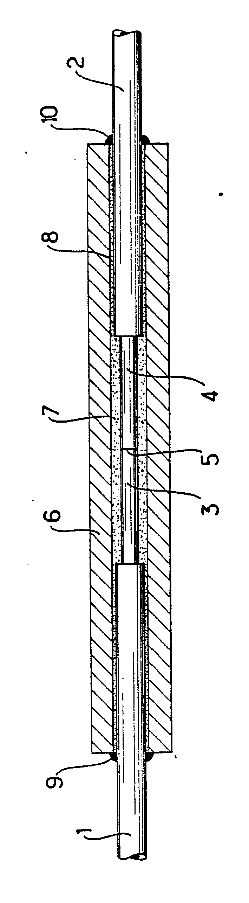

Il est décrit ci-après, à titre d'exemple et en référence à la figure du dessin annexé, un dispositif de renforcement de la soudure en bout de deux fibres optiques pour câble de télécommunications.

Deux fibres optiques gainées 1 et 2, de diamètre un peu inférieur à 0,25 mm, ont été dénudées par enlèvement de leur gaine de protection mécanique à leurs zones d'extrémités 3 et 4, sur une distance d'environ 20 mm, de part et d'autre de leur soudure 5. Celle-ci a été traitée par immersion dans de l'acide fluorhydrique à 48% en poids. Les fibres, y compris leurs gaines optiques, sont entourées par un tube capillaire 6 en acier inoxydable à haut module d'élasticité, de l'ordre de 15000, de longueur 100 mm, de diamètre extérieur 0,6 mm et d'épaisseur 0,15 mm. L'espace interne 7 subsistant entre les fibres dénudées et le tube capillaire, et l'espace 8 compris entre les gaines de protection mécanique des fibres et le tube capillaire, sont remplis par un adhésif à prise lente (6 jours par exemple), durcissant en l'absence d'air, par exemple un poly-diester acrylique, qui, du fait de sa fluidité, pénètre par capillarité dans tout le volume compris entre les fibres et la surface interne du tube capillaire. La prise de cet adhésif durant plusieurs jours, les extrémités des fibres à la sortie du capillaire sont immobilisées par deux gouttes 9, 10 d'un adhésif à prise rapide, tel qu'un poly-cyanoacrylate, ce qui permet de manipuler presque immédiatement la jonction, sans cependant la soumettre à des contraintes de traction.

Du fait que l'adhésif à prise lente mouille très bien la silice et l'acier inoxydable et remplit parfaitement le volume subsistant entre les fibres et la surface interne du capillaire, sur toute la longueur de ce dernier, les efforts de traction appliqués aux fibres sont intégralement transmis au tube capillaire. Les propriétés mécanique de celui-ci sont telles que, sous une contrainte de traction correspondant à la charge de rupture de la fibre non soudée, il ne s'allonge pas d'une valeur supérieure à celle que la fibre optique soudée non renforcée peut accepter. On obtient ainsi pour la zone de la soudure une résistance à la traction identique à celle de la fibre optique gainée sans soudure, de l'ordre de 4 à 6 daN pour une fibre de silice.

Bien que le dispositif de renforcement de la soudure en bout de deux fibres optiques qui vient d'être décrit en référence à la figure du dessin paraisse la forme de réalisation préférable de l'invention, on comprendra que diverses modifications peuvent lui être apportées sans sortir du cadre de l'invention. En particulier, on peut substituer à l'acier inoxydable un autre métal de résistance mécanique comparable, et utiliser un tube de plus faible diamètre.

**Revendications**

1. Dispositif de renforcement de la soudure en bout (5) de deux fibres optiques (1, 2) dont les extrémités ont été dénudées par enlèvement de leur gaine de protection mécanique, comprenant un tube capillaire (6) en métal pout le renforcement de ladite soudure, entourant avec un faible jeu les gaines des fibres optiques de part et d'autre de ces extrémités sur une certaine longueur de ces gaines, caractérisé en ce que tout l'espace (7, 8) subsistant entre le tube capillaire et, d'une part les extrémités dénudées des fibres, d'autres part les gaines de celles-ci, est rempli d'un adhésif liquide qui durcit en l'absence d'air, la sortie de chaque extrémité du tube capillaire étant obturée par une goutte d'un adhésif à prise substantiellement plus rapide que ledit adhésif liquide.

2. Dispositif selon la revendication 1, caractérisé en ce que l'adhésif à prise lente est un polydiester acrylique.

3. Dispositif selon l'une des revendications 1 et 2, caractérisé en ce que le métal du tube capillaire est un acier inoxydable.

4. Dispositif selon l'une des revendications 1 à 3, caractérisé en ce que l'épaisseur du tube (6) est d'environ le quart de son diamètre extérieur.

**Patentansprüche**

1. Vorrichtung zur Verstärkung stirnseitiger Verschweißung (5) zweier Lichtleitfasern (1, 2), deren Enden durch Entfernen ihrer mechanischen Schutzhülle bloßgelegt wurden, mit einem Kapillarrohr (6) aus Metall für die Verstärkung der Verschweißung, das mit einem geringen Spiel die Hüllen der Lichtleitfasern auf beiden Seiten dieser Enden über eine gewisse Länge dieser Hüllen umgibt, dadurch gekennzeichnet, daß der gesamte Zwischenraum (7, 8) zwischen dem Kapillarrohr und den bloßgelegten Enden der Fasern einerseits sowie ihrer Hüllen andererseits mit einem Flüssigkleber gefüllt ist, der in Abwesenheit von Luft erhärtet, wobei der Ausgang jedes Endes des Kapillarrohrs von einem Tropfen eines Klebers verschlossen wird, der wesentlich schneller hart wird als der Flüssigkleber.

2. Vorrichtung nach Anspruch 1, dadurch gekennzeichnet, daß der langsame Kleber ein Acrylpolydiester ist.

3. Vorrichtung nach einem der Ansprüche 1 und 2, dadurch gekennzeichnet, daß das Metall des Kapillarrohrs rostfreier Stahl ist.

4. Vorrichtung nach einem der Ansprüche 1 bis 3, dadurch gekennzeichnet, daß die Dicke des Rohrs (6) etwa ein Viertel seines Außendurchmessers beträgt.

**Claims**

1. A device for reinforcing a butt weld (5) between the ends of two optical fibres (1, 2), the ends of which have been bared by stripping off their mechanical protection sheath, comprising a capillary tube (6) made of a metal for reinforcing said weld, surrounding with a small clearance the sheaths of the optical fibres on either side of these ends over a certain length of these sheaths, characterized in that the whole space (7, 8) remaining between the capillary tube and the bared ends of the fibers on the one hand and their sheaths on the other hand, is filled with a liquid adhesive which hardens in the absence of air, the outlet of each end of the capillary tube being obturated by a drop of an adhesive which hardens substantially quicker than said liquid adhesive.

2. A device according to claim 1, characterized in that the slot-setting adhesive is an acrylic polydiester.

3. A device according to one of claims 1 and 2, characterized in that the metal of the capillary tube is stainless steel.

4. A device according to one of claims 1 to 3, characterized in that the thickness of the tube (6) is about one fourth of its outer diameter.

0 078 049